# EUROPEAN PATENT SPECIFICATION

(11) **EP 3 427 973 B1**
(45) Date of publication and mention of the grant of the patent: **20.05.2020**
(21) Application number: 18183181.9
(22) Date of filing: 12.07.2018
(51) Int. Cl.: B60B 5/02, B29C 45/00

(54) **VEHICLE WHEEL MADE OF THERMOPLASTIC MATRIX COMPOSITE MATERIAL**
FAHRZEUGRAD AUS THERMOPLASTISCHEM MATRIXVERBUNDWERKSTOFF
ROUE DE VÉHICULE CONSTITUÉE D'UN MATÉRIAU COMPOSITE À MATRICE THERMOPLASTIQUE

(30) Priority: 13.07.2017 IT 201700078600
(43) Date of publication of application: 16.01.2019
(73) Proprietor: MW Italia S.r.l., 10098 Rivoli (TO) (IT)
(72) Inventor: GALLIO, Giorgio, 10126 TORINO (IT); ROVARINO, Davide Fabio, 10071 BORGARO TORINESE (Torino) (IT); PERRIS MAGNETTO, Gabriele, 10098 RIVOLI (Torino) (IT)
(74) Representative: Vanzini, Christian

(56) References cited:
- CH-A2- 709 492
- US-A- 5 918 947
- US-A1- 2004 036 348
- US-A1- 2014 346 845

## Description

The present invention relates in general to vehicle wheels made of composite material.

A technique used for the production of such wheels involves the use of thermosetting matrix prepregs. Continuous fiber laminates pre-impregnated with resin are laminated manually onto a mold. Cross-linking takes place in an autoclave at high pressures and temperatures to increase the adhesion of the fibers and obtain maximum performance. Wheels produced using this technique are generally only available for very high-performance cars.

Another technique involves high-pressure resin transfer molding. This technology allows one to obtain high quality parts, second only to the parts produced in the autoclave. However, the costs are lower because prepregs are not used. One starts with the fabric, which is preformed, then the resin is injected under mold at high pressure. The cross-linking reaction takes place hot in the mold.

Another technique is based on injection molding. The long fiber polymer is melted and injected into a mold. The wheel is injection-molded at the same time as the cap with the aid of a rotating table that separates the two parts during filling and assembles them once they have been made.

A further technique is based on hot forming and injection back-molding. A continuous fiber fabric already impregnated with a thermoplastic matrix is hot formed. In the same mold, it is possible to back-inject the same molten thermoplastic polymer loaded with short/long fibers to create additional structures on the component that could not be created by hot forming.

With reference to the latter technique, wheels have been proposed with a sandwich disc structure where, between two hot-formed laminates, there is a structure created by injection. A wheel of this type is described in CH 709 492 A2.

An object of the present invention is to propose an alternative wheel to those known.

Therefore, the object of the present invention is a vehicle wheel comprising a rim and a disk of thermoplastic matrix composite material, wherein the disk comprises
a cover part formed by a laminate of thermoplastic matrix composite material reinforced with continuous fiber, said cover part extending from a central area to a periphery of the disk,
a central plate of metallic material coupled to the cover part at the central part of the disk, said plate having a central hole and a plurality of fixing holes arranged around the central hole, and
a reinforcement part made of thermoplastic matrix composite material reinforced with discontinuous fiber applied on an axially inner side of the disk and coupled to the cover part and to the central plate.

"Continuous fiber" conventionally means a fiber having a preferential orientation and an extension which generally covers the entire part of composite material, while discontinuous fiber conventionally means a fragmented fiber having a random orientation (see for example Mallick P.K. Fiber-Reinforced Composites: Materials, Manufacturing, and Design, Third Edition, CRC Press (19 November 2007) and Campbell F.C. Structural Composite Materials, ASM International (2010)). Discontinuous fiber is generally classified as a short fiber, having a length of a few millimeters, or long fiber, having a length of some tens of millimeters.

Another object of the invention is a manufacturing method for a disk of a wheel, comprising the steps of:
providing a laminate of thermoplastic matrix composite material reinforced with continuous fiber;
providing a plate of metallic material, said plate having a central hole and a plurality of fixing holes arranged around the central hole;
coupling the laminate to the plate;
subjecting the laminate to hot forming; and
molding a thermoplastic matrix composite material reinforced with discontinuous fiber on at least one side of the laminate, in order to couple it to the laminate and to the plate.

Preferred forms of the invention are defined in the dependent claims, which are intended as an integral part of the present description.

Characteristics and advantages of the wheel according to the invention will become more apparent in the following detailed description of some embodiments of the invention, made with reference to the accompanying drawings, provided purely to be illustrative and nonlimiting, wherein:

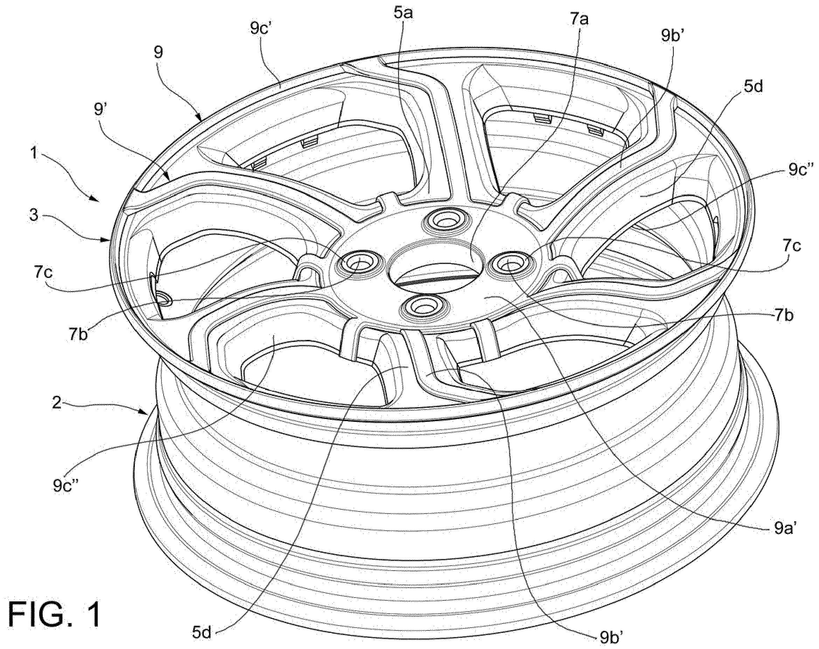

- figure 1 is a perspective view of a wheel according to the invention;

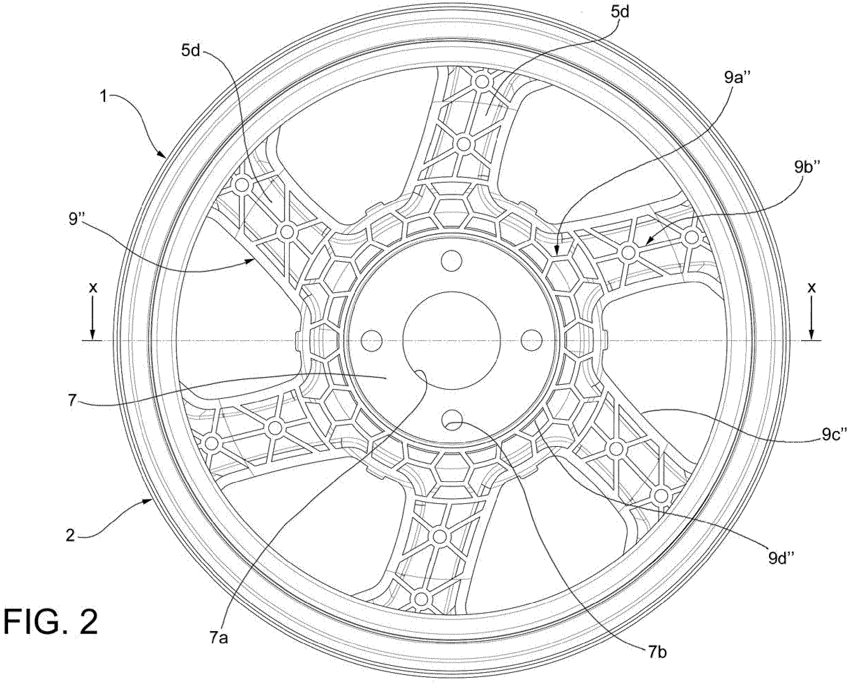

- figures 2 and 3 are respectively a plan view from the inner side and a view in cross section of the wheel taken along the line X-X of figure 2;

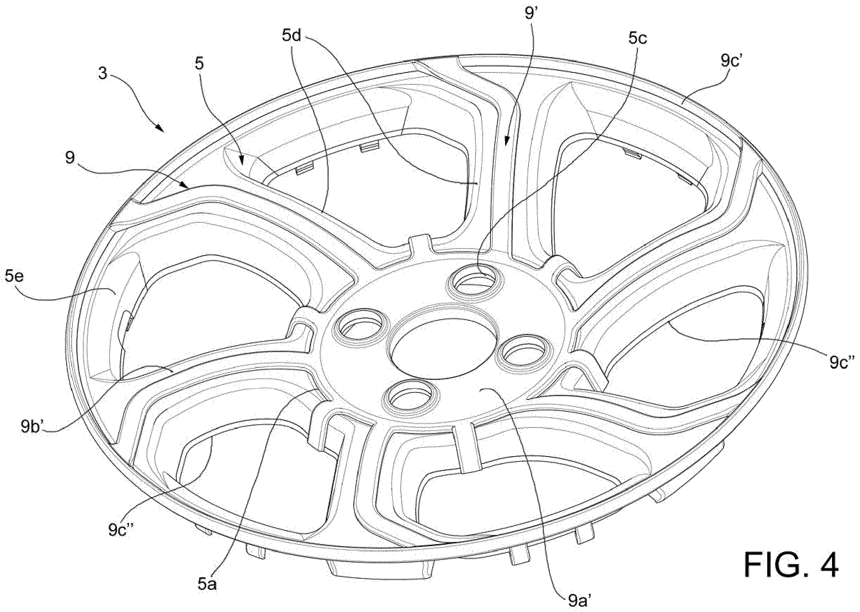

- figure 4 is a perspective view of a disk of the wheel of figure 1, wherein a central plate has been removed;
- figures 5 and 6 are respectively a perspective view and a view in cross section of the disk, wherein a reinforcement part has been removed;
- figures 7 and 8 are respectively a perspective view and a view in cross-section of the disk, wherein a cover part has been removed; and
- figure 9 is a perspective view of a central plate of the disk.

In the drawings, a wheel for vehicles according to the invention is indicated collectively at 1.

The wheel 1 comprises, in a manner known per se, a shaped rim 2 of composite material, preferably comprising a fiber-reinforced thermoplastic resin matrix, and a disk 3, also made of composite material with a fiber-reinforced thermoplastic resin matrix.

The disk 3 is preferably of the spoked type and comprises a central portion for connection to an axle hub (not shown), from which a plurality of angularly spaced spokes extends. The radially outer ends of the spokes are interconnected by a peripheral connecting ring which extends concentrically with the axis of the wheel 1. The connecting ring is applied and attached to an inner annular surface of the rim 2. According to other embodiments, the disk could be of a different type, for example, a substantially continuous disk and provided with small peripheral windows.

The disk 3 is formed of a plurality of parts made of different materials coupled to each other.

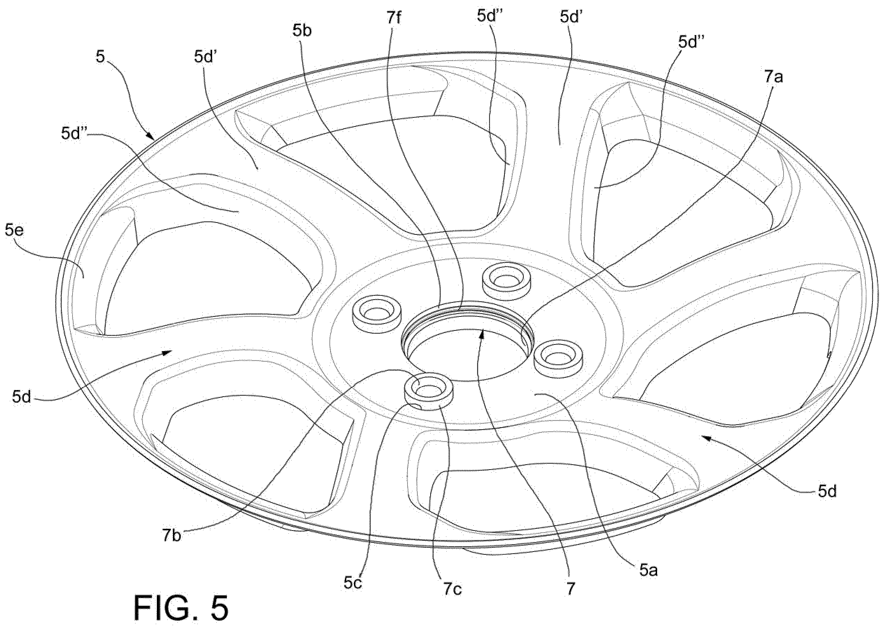

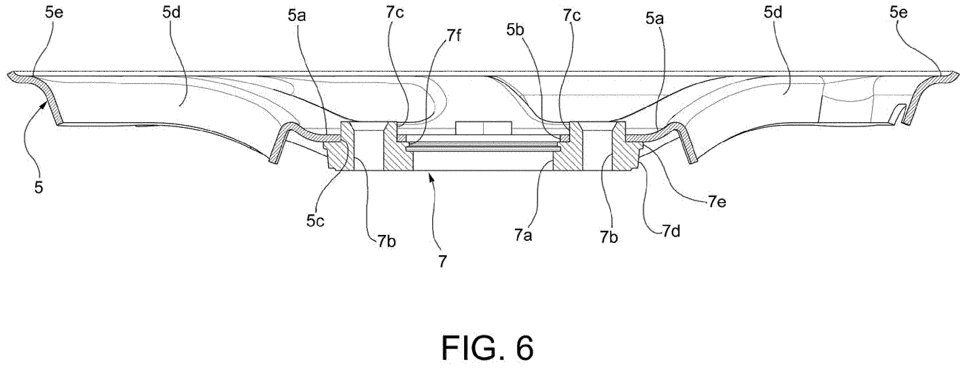

In particular, the disk 3 comprises a cover part 5, shown in particular in figures 5 and 6, which is formed of a laminate of a thermoplastic matrix composite material reinforced with continuous fiber, in particular a fabric. According to one embodiment, the cover part could also include discontinuous fiber. The cover part 5 extends from a central area to a periphery of the disk 3. In the illustrated example, the cover part 5 comprises a central portion 5a corresponding to the central part of the disk, wherein is made a central hole 5b and a plurality of holes 5c arranged around the central hole 5b, a plurality of spokes 5d corresponding to the spokes of the disk, which extends radially from the central part 5a, and a connecting ring 5e corresponding to the connecting ring of the disk, which interconnects the radially outer ends of the spokes 5d.

Each of the spokes 5d has an open cross-section, for example, in the shape of a channel or an omega, and comprises a spoke core 5d' and a pair of spoke flanks 5d" delimiting respective disk windows (shown in figure 5).

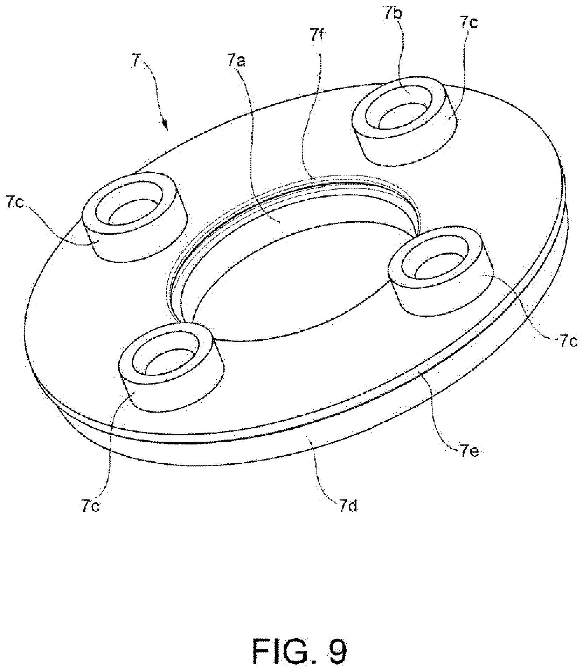

The disk 3 further comprises a central plate 7 of metallic material, for example, aluminum, shown in particular in figure 9. The central plate 7 is coupled to the cover part 5 at the central part 5a thereof, or at the central part of the disk, and has a central hole 7a and a plurality of fixing holes 7b arranged around the central hole 7a and provided for the insertion of bolts for attaching the wheel to the hub of a vehicle. The fixing holes 7b are formed at respective bosses 7c which protrude axially from an axially outer side of the plate 7.

For the purposes of the present invention, the terms "axially outer" and "axially inner" refer to the direction of the wheel axis in a condition of use, i.e. the "axially inner" side is the one directed towards the vehicle, and the "axially outer" side means the one facing the other side with respect to the vehicle.

The plate 7 has a peripheral edge 7d, on which is formed a flange 7e, extending radially outward. On the edge of the central hole 7a, a flange 7f is also formed, extending radially inward. As will be explained in the following, the flanges 7e and 7f are used for anchoring the thermoplastic material to the plate 7. In addition, or alternatively, other anchorage formations of different shapes and/or arranged in other areas of the plate may be envisaged, for example at the bosses 7c.

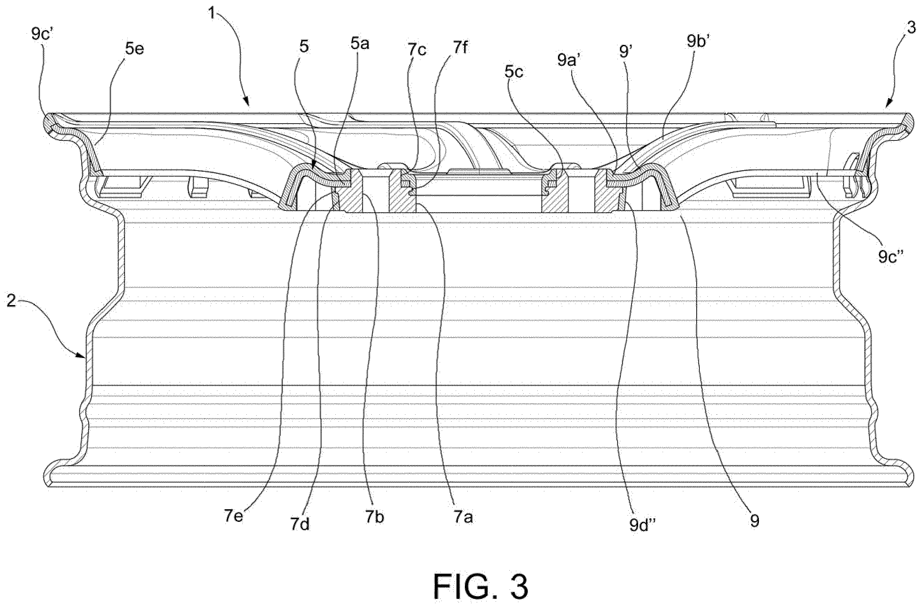

As may be seen in particular in figures 3 and 5-6, the bosses 7c of the central plate 7 are inserted into the holes 5c of the central part 5a of the cover part 5. Moreover, the central part 5a of the cover part 5 is in contact with the axially outer side of the plate 7 and covers almost completely such axially outer side, with the exception of an edge area around the central hole 7a at the flange 7f, which extends radially inward.

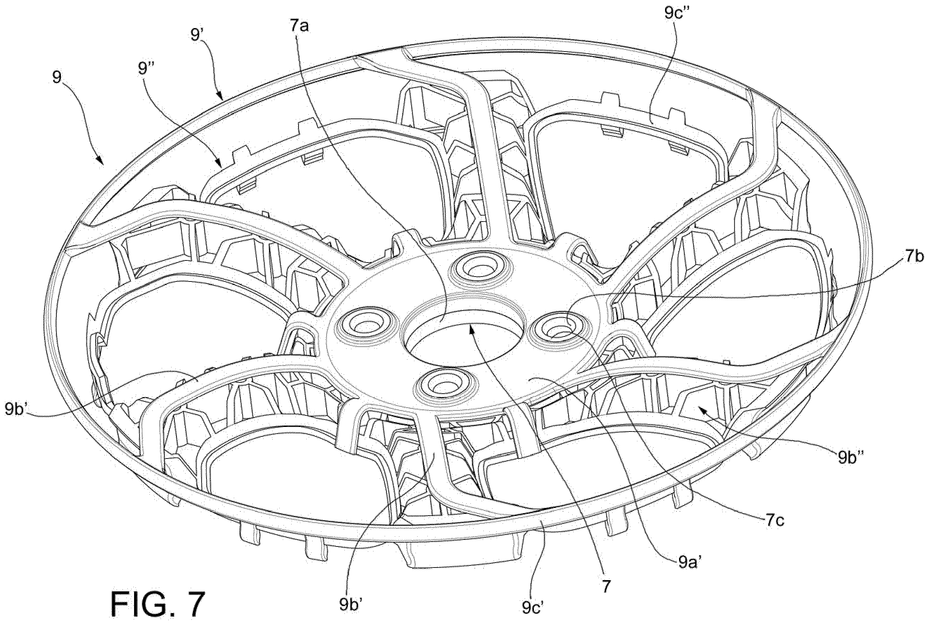

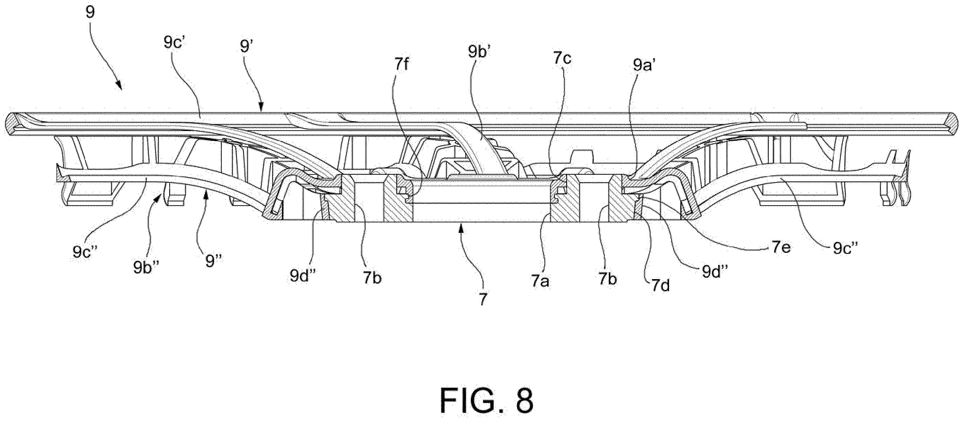

The disk 3 further comprises a reinforcement part 9 made of a thermoplastic matrix composite material reinforced with a short and/or long fiber, shown in particular in figures 7 and 8. The reinforcement part 9 is applied on an axially outer side and on an axially inner side of the cover part 5, or of the disk 3. The reinforcement part 9 is coupled to the cover part 5 and to the central plate 7.

The reinforcement part 9 therefore comprises a portion disposed on the axially outer side of the disk, which hereinafter will be indicated collectively at 9', and a portion arranged on the axially inner side of the disk, which will be indicated collectively at 9". Such portions 9' and 9" may be disjointed or connected to each other by bridges made of the same material as the reinforcement part 9.

The portion 9' of the reinforcement part 9 arranged on the axially outer side comprises a central region 9a' covering the axially outer side of the central part 5a of the cover part 5, a plurality of spoke regions 9b' extending radially from the central region 9a' and applied on the axially outer side of the spokes 5d of the cover part 5, and a annular peripheral region 9c' interconnecting the radially outer ends of the spoke regions 9b' and applied on the axially outer side of the connecting ring 5e of the cover part 5.

The central region 9a' of the portion 9' of the reinforcement part 9 arranged on the axially outer side completely covers a central area of the central part 5a of the cover part 5 and extends radially inward beyond the edge of the hole 5b of such part and axially inward beyond the flange 7f of the plate, which is then embraced by the material of the central region 9a'. The flange 7f of the plate therefore acts as an anchoring formation for the material of the portion 9' of the reinforcement part 9 arranged on the axially outer side (see figures 3 and 8).

The bosses 7c formed on the axially outer side of the central plate 7 project through the cover part 5, as well as through the reinforcement part 9.

The spoke regions 9b' form strips which extend approximately to the centerline of the spokes 5d of the cover part 5. The peripheral annular region 9c' forms a closed ring-shaped strip which covers or embraces an edge of the connecting ring 5e of the cover part 5.

The peripheral edge 7d and the flange 7e of the central plate 7 are interposed between the cover part 5 and an area 9d" of the portion 9" of the reinforcement part 9 arranged on the axially inner side. The arrangement is such whereby the central plate 7 has an axially inner side that is exposed except for an area at the peripheral edge 7d, which is covered by the material of the reinforcement part 9 (see figures 3 and 8).

The portion 9" of the reinforcement part 9 arranged on the axially inner side comprises a cross-linked structure, in particular a honeycomb structure 9a" at the central part 5a of the cover part 5, i.e., the central part of the disk 3, and a crossed rib structure 9b" at each of the spokes 5d of the cover part 5, i.e., of the spokes of the disk 3.

The portion 9" of the reinforcement part 9 arranged on the axially inner side also forms, at each window of the disk 3, a closed, ring-shaped strip 9c" that covers or embraces an edge of the cover part 5, comprising a radially inner side provided on the central part 5a, a pair of lateral sides provided on respective adjacent spokes 5d, and a radially outer side provided on the connecting ring 5e. More generally, the reinforcement part 9 is arranged so as to have portions which embrace respective free edges of the cover part 5. This prevents the continuous fiber of the cover part 5 from emerging outwardly through the free edge of the latter, which would be undesirable not only from an aesthetic point of view, but also from a technical point of view, due to the risk of delamination.

A possible manufacturing process of the disk 3 described above envisages that a planar, semi-finished product made of a thermoplastic matrix composite material reinforced with a continuous fiber, provided with holes 5b and 5c and peripheral windows, is initially coupled to the plate 7, inserting the bosses 7c of such plate into the holes 5c.

The assembly thus composed is subjected to hot forming in a mold, and subsequent consolidation, to substantially form the cover part 5.

Preferably in the same mold used for hot forming, a thermoplastic matrix composite material reinforced with short and/or long fibers on opposite sides of the laminate is molded by injection, so as to couple it to the laminate and to the plate. The reinforcement part 9 is thus obtained.

The product thus obtained may be subjected to further processing, for example trimming of the excess parts.

## Claims

1. Vehicle wheel (1) comprising a rim (2) and a disk (3) of thermoplastic matrix composite material, wherein the disk comprises
a cover part (5) formed by a laminate of thermoplastic matrix composite material reinforced with continuous fiber, said cover part (5) extending from a central area (5a) to a periphery (5e) of the disk (3),
a central plate (7) of metallic material coupled to the cover part (5) at the central area (5a) of the disk (3), said plate having a central hole (7a) and a plurality of fixing holes (7b) arranged around the central hole (7a), and
a reinforcement part (9) of thermoplastic matrix composite material reinforced with discontinuous fiber, applied on an axially inner side of the disk (3) and coupled to the cover part (5) and to the central plate (7).

2. Wheel according to claim 1, wherein the reinforcement part (9) is also applied on an axially external side of the disk (3) and coupled to the cover part (5) and to the central plate (7).

3. Wheel according to claim 1 or 2, wherein said cover part forms a plurality of spokes (5d), each of said spokes having an open cross-section and comprising a pair of spoke flanks (5d") delimiting respective windows of the disk.

4. Wheel according to one of the preceding claims, wherein the central plate (7) has a peripheral edge (7d) interposed between the cover part (5) and the reinforcement part (9).

5. Wheel according to claim 4, wherein the central plate (7) has an axially inner side that is uncovered except for an area at the peripheral edge (7d) that is covered by the material of the reinforcement part (9).

6. Wheel according to any of the preceding claims, wherein the central plate (7) has an axially outer side coupled to the cover part (5) and to the reinforcement part (9), the cover part (5) being interposed between the reinforcement part (9) and the axially outer side of the central plate (7).

7. Wheel according to claim 6, wherein at its axially outer side the central plate (7) has a respective boss (7c) formed at each fixing hole (7b), each boss (7c) protruding through the cover part (5) and the reinforcement part (9).

8. Wheel according to claim 6 or 7, wherein the central plate (7) has an anchoring formation (7f) that in the axial direction is embraced by the material of the reinforcement part (9).

9. Wheel according to any of the preceding claims, wherein at the axially inner side of the disk (3) the reinforcement part (9) comprises a reticular structure (9a", 9b").

10. Wheel according to one of the preceding claims, wherein the reinforcement part (9) comprises portions (9c', 9c") which embrace respective free edges of the cover part (5).

11. Method for manufacturing a disk of a wheel according to any of the preceding claims, comprising the steps of:
providing a laminate of thermoplastic matrix composite material reinforced with continuous fiber;
providing a plate (7) of metallic material, said plate (7) having a central hole (7a) and a plurality of fixing holes (7b) arranged around the central hole (7a);
coupling the laminate to the plate (7);
subjecting the laminate to hot forming; and
molding a thermoplastic matrix composite material reinforced with discontinuous fiber on opposite sides of the laminate, in order to couple the material to the laminate and to the plate (7).

12. Method according to claim 11, wherein hot forming and injection molding are carried out in one and the same mold.

## Patentansprüche

1. Fahrzeugrad (1), umfassend eine Felge (2) und eine Scheibe (3) aus thermoplastischem Matrixverbundwerkstoff, wobei die Scheibe Folgendes umfasst:
einen Abdeckungsteil (5), der aus einem Schichtstoff aus thermoplastischem Matrixverbundwerkstoff, der mit Endlosfaser verstärkt ist, gebildet ist, wobei sich der Abdeckungsteil (5) von einem Zentralbereich (5a) zu einem Umfang (5e) der Scheibe (3) erstreckt,
eine zentrale Platte (7) aus Metallwerkstoff, die an dem Zentralbereich (5a) der Scheibe (3) an den Abdeckungsteil (5) gekoppelt ist, wobei die Platte eine zentrale Bohrung (7a) und eine Vielzahl von Fixierbohrungen (7b) aufweist, die um die zentrale Bohrung (7a) herum angeordnet sind, und
einen Verstärkungsteil (9) aus thermoplastischem Matrixverbundwerkstoff, der mit nicht-fortlaufender Faser verstärkt ist, der an einer axialen Innenseite der Scheibe (3) angebracht und an den Abdeckungsteil (5) und die zentrale Platte (7) gekoppelt ist.

2. Rad nach Anspruch 1, wobei der Verstärkungsteil (9) auch an einer axial externen Seite der Scheibe (3) angebracht und an den Abdeckungsteil (5) und die zentrale Platte (7) gekoppelt ist.

3. Rad nach Anspruch 1 oder 2, wobei der Abdeckungsteil eine Vielzahl von Speichen (5d) bildet, wobei jede der Speichen einen offenen Querschnitt aufweist und ein Paar Speichenflanken (5d") umfasst, die jeweilige Fenster der Scheibe abgrenzen.

4. Rad nach einem beliebigen der vorhergehenden Ansprüche, wobei die zentrale Platte (7) eine Umfangskante (7d) aufweist, die zwischen dem Abdeckungsteil (5) und dem Verstärkungsteil (9) angeordnet ist.

5. Rad nach Anspruch 4, wobei die zentrale Platte (7) eine axiale Innenseite aufweist, die nicht bedeckt ist, außer an einem Bereich an der Umfangskante (7d), der von dem Werkstoff des Verstärkungsteils (9) bedeckt ist.

6. Rad nach einem beliebigen der vorhergehenden Ansprüche, wobei die zentrale Platte (7) eine axiale Außenseite aufweist, die an den Abdeckungsteil (5) und den Verstärkungsteil (9) gekoppelt ist, wobei der Abdeckungsteil (5) zwischen dem Verstärkungsteil (9) und der axialen Außenseite der zentralen Platte (7) angeordnet ist.

7. Rad nach Anspruch 6, wobei die zentrale Platte (7) an ihrer axialen Außenseite eine jeweilige Erhebung (7c) aufweist, die an jeder Fixierbohrung (7b) gebildet ist, wobei jede Erhebung (7c) durch den Abdeckungsteil (5) und den Verstärkungsteil (9) hervorsteht.

8. Rad nach Anspruch 6 oder 7, wobei die zentrale Platte (7) eine Verankerungsformation (7f) aufweist, die in der axialen Richtung von dem Werkstoff des Verstärkungsteils (9) eingeschlossen ist.

9. Rad nach einem beliebigen der vorhergehenden Ansprüche, wobei der Verstärkungsteil (9) an der axialen Innenseite der Scheibe (3) eine netzartige Struktur (9a", 9b") umfasst.

10. Rad nach einem beliebigen der vorhergehenden Ansprüche, wobei der Verstärkungsteil (9) Abschnitte (9c', 9c") umfasst, die jeweilige freie Kanten des Abdeckungsteils (5) einschließen.

11. Verfahren zum Herstellen einer Scheibe eines Rad nach einem beliebigen der vorhergehenden Ansprüche, umfassend folgende Schritte:
Vorsehen eines Schichtstoffs aus thermoplastischem Matrixverbundwerkstoff, der mit Endlosfaser verstärkt ist;
Vorsehen einer Platte (7) aus Metallwerkstoff, wobei die Platte (7) eine zentrale Bohrung (7a) und eine Vielzahl von Fixierbohrungen (7b) aufweist, die um die zentrale Bohrung (7a) angebracht sind;
Koppeln des Schichtstoffs an die Platte (7);
Unterziehen des Schichtstoffs einer Warmformung; und
Spritzgießen eines thermoplastischen Matrixverbundwerkstoffs, der mit nicht-fortlaufender Faser verstärkt ist, auf gegenüberliegenden Seiten des Schichtstoffs, um das Material an den Schichtstoff und die Platte (7) zu koppeln.

12. Verfahren nach Anspruch 11, wobei Warmformung und Spritzgießen in ein und derselben Form durchgeführt werden.

## Revendications

1. Roue de véhicule (1) comprenant une jante (2) et un disque (3) en matériau composite à matrice thermoplastique, dans lequel le disque comprend
une partie enjoliveur (5) formée par un stratifié en matériau composite à matrice thermoplastique renforcé avec de la fibre continue, ladite partie enjoliveur (5) s'étendant d'une zone centrale (5a) à un pourtour (5e) du disque (3),
une plaque centrale (7) en matériau métallique couplée à la partie enjoliveur (5) au niveau de la zone centrale (5a) du disque (3), ladite plaque ayant un trou central (7a) et une pluralité de trous de fixation (7b) agencés autour du trou central (7a), et
une partie renforcement (9) en matériau composite à matrice thermoplastique renforcé avec une fibre discontinue, appliquée sur un côté axialement interne du disque (3) et couplée à la partie enjoliveur (5) et à la plaque centrale (7).

2. Roue selon la revendication 1, dans laquelle la partie renforcement (9) est également appliquée sur un côté axialement externe du disque (3) et couplée à la partie enjoliveur (5) et à la plaque centrale (7).

3. Roue selon la revendication 1 ou 2, dans laquelle ladite partie enjoliveur forme une pluralité de rayons (5d), chacun desdits rayons ayant une section transversale ouverte et comprenant une paire de flancs de rayons (5d") délimitant des fenêtres respectives du disque.

4. Roue selon l'une des revendications précédentes, dans laquelle la plaque centrale (7) a un bord périphérique (7d) intercalé entre la partie enjoliveur (5) et la partie renforcement (9).

5. Roue selon la revendication 4, dans laquelle la plaque centrale (7) a un côté axialement interne qui est découvert à l'exception d'une zone au niveau du bord périphérique (7d) qui est couverte par le matériau de la partie renforcement (9).

6. Roue selon l'une quelconque des revendications précédentes, dans laquelle la plaque centrale (7) a un côté axialement externe couplé à la partie enjoliveur (5) et à la partie renforcement (9), la partie enjoliveur (5) étant intercalée entre la partie renforcement (9) et le côté axialement externe de la plaque centrale (7).

7. Roue selon la revendication 6, dans laquelle au niveau de son côté axialement externe, la plaque centrale (7) présente un bossage (7c) respectif formé au niveau de chaque trou de fixation (7b), chaque bossage (7c) faisant saillie à travers la partie enjoliveur (5) et la partie renforcement (9).

8. Roue selon la revendication 6 ou 7, dans laquelle la plaque centrale (7) présente une formation d'ancrage (7f) qui, dans la direction axiale est englobée par le matériau de la partie renforcement (9).

9. Roue selon l'une quelconque des revendications précédentes, dans laquelle au niveau du côté axialement interne du disque (3), la partie renforcement (9) comprend une structure réticulaire (9a", 9b").

10. Roue selon l'une des revendications précédentes, dans laquelle la partie renforcement (9) comprend des portions (9c', 9c") qui englobent des bords libres respectifs de la partie enjoliveur (5).

11. Procédé de fabrication d'un disque d'une roue selon l'une quelconque des revendications précédentes, comprenant les étapes de :
fourniture d'un stratifié en matériau composite à matrice thermoplastique renforcé avec de la fibre continue ;
fourniture d'une plaque (7) en matériau métallique, ladite plaque (7) ayant un trou central (7a) et une pluralité de trous de fixation (7b) agencés autour du trou central (7a) ;
couplage du stratifié à la plaque (7) ;
soumission du stratifié à un formage à chaud ; et
moulage d'un matériau composite à matrice thermoplastique renforcé avec de la fibre discontinue sur les côtés opposés du stratifié, afin de coupler le matériau au stratifié et à la plaque (7).

12. Procédé selon la revendication 11, dans lequel le formage à chaud et le moulage par injection sont réalisés dans un seul et même moule.
